# EUROPÄISCHE PATENTSCHRIFT

(11) **EP 2 225 132 B1**
(45) Veröffentlichungstag und Bekanntmachung des Hinweises auf die Patenterteilung: **14.09.2011**
(21) Anmeldenummer: 08866596.3
(22) Anmeldetag: 22.12.2008
(51) Int. Cl.: B60T 8/00, B60T 8/32, B60T 8/42, B60T 8/44, B60T 8/48, B60T 13/74

(54) **BREMSANLAGE MIT MINDESTENS EINER FÖRDERUNGSEINRICHTUNG ZUM NACHFÖRDERN VON BREMSFLÜSSIGKEIT IN DIE ARBEITSRÄUME EINES BREMSKRAFTVERSTÄRKERS**
BRAKE SYSTEM COMPRISING AT LEAST ONE CONVEYING UNIT FOR REDELIVERING BRAKE FLUID TO THE WORKING CHAMBERS OF A BRAKE BOOSTER
SYSTÈME DE FREINAGE COMPRENANT AU MOINS UN DISPOSITIF DE REFOULEMENT POUR LE POST-REFOULEMENT DE LIQUIDE DE FREIN VERS LES CHAMBRES DE TRAVAIL DU SERVOFREIN

(30) Priorität: 21.12.2007 DE 102007062839; 14.08.2008 DE 102008051316
(43) Veröffentlichungstag der Anmeldung: 08.09.2010
(73) Patentinhaber: IPGATE AG, 8044 Zürich (CH)
(72) Erfinder: LEIBER, Heinz, 71739 Oberriexingen (DE); UNTERFRAUNER, Valentin, 80935 München (DE)
(74) Vertreter: Lenzing Gerber Stute
(86) Internationale Anmeldenummer: PCT/EP2008/011021
(87) Internationale Veröffentlichungsnummer: WO 2009/083217

(56) Entgegenhaltungen:
- WO-A-2004/110840
- DE-A1-102005 018 649
- DE-C1- 4 335 769

## Beschreibung

Die vorliegende Erfindung betrifft eine Bremsanlage nach dem Oberbegriff des Anspruch 1.

Der Hauptbremszylinder (HZ) einer Kfz Bremsanlage wird bei konventionellen Systemen so ausgelegt, dass dessen Verdrängungsvolumen der Volumenaufnahme der Radbremsen zum Erreichen des maximale Bremsdruckes entspricht. Zudem wird eine Reserve für Extremfälle wie Fading oder schlecht entlüftete Bremsanlagen vorgesehen. Die Volumenaufnahme der Radbremsen ist fahrzeugabhängig. Grundsätzlich steigt das Volumen relativ zum Fahrzeuggewicht. Das Verdrängungsvolumen des Hz kann durch dessen Kolbendurchmesser und Hub bestimmt werden. Bei konventionellen Bremssystemen ist das Bremspedal über die Druckstange mit dem HZ verbunden, sodass der Pedalhub über eine konstante Pedalübersetzung mit dem Druckstangenkolben (DK) des Hz verbunden ist. Aus ergonomischen Gründen wird die Bremsanlage so ausgelegt, dass bei ca. 50% Pedalweg der Blockierdruck erreicht wird. Da der Pedalhub im Fahrzeug begrenzt ist, muss das nötige Verdrängungsvolumen für höhere Fahrzeugklassen durch Vergrößerung des Hz Durchmessers bereitgestellt werden.

Aus der Kolbenfläche ergibt sich die Kolbenkraft welche zum Erreichen des gewünschten Bremsdruckes erforderlich ist. Die Pedalkraft wird durch den sogenannten Vakuumbremskraftverstärker (Vak. BKV) verstärkt, sodass die Pedalkräfte bei intakter Bremskraftunterstützung moderat sind.

Für die Auslegung der Bremsanlage sind noch 2 Fakten kritisch:
- Die Verstärkungskraft des Vak. BKV ist durch den sogenannten Aussteuerpunkt begrenzt. In der Regel liegt dieser Aussteuerpunkt etwas oberhalb des Blockierdruckes auf hohem Reibwert, welcher ca. 100 bar entspricht. Bei Fading der Bremsanlage sind jedoch höhere Drücke erforderlich, sodass die Bremskraftverstärkung in Sättigung geht und die Pedalkräfte erheblich ansteigen. Um dem entgegenzuwirken wird bei Fahrzeugen mit ESP Anlage die sogenannte ESP Pumpe benutzt um Bremsflüssigkeit aus dem HZ in die Bremskreise zu pumpen. Hierbei hängt die Druckanstiegsgeschwindigkeit von der Pumpenleistung ab. Die Pumpenleistung liegt bei großen Fahrzeugen bei ca. 400 Watt, sodass die Druckanstiegsgeschwindigkeit erheblich geringer ist als im Druckbereich bis zum Aussteuerpunkt.
- Die Kolbenfläche des Hz bewirkt bei BKV Ausfall sehr hohe Pedalkräfte. Somit ist bei BKV Ausfall die Fußkraft zum Erreichen eines bestimmten Druckes etwa 5 mal größer als bei intaktem BKV. Durch die Rückstellfedern und Reibung im Hz und Vak. BKV ist die Pedalanfangskraft zudem sehr hoch. Ab mittleren Fahrzeugklassen kann somit der Normalfahrer bei BKV Ausfall praktisch keine vernünftige Abbremsung mehr erreichen. Zudem wird der Fahrer zusätzlich durch die ungewohnt hohen Anfangsbetätigungskräfte irritiert.

Bei Systemen mit Wegsimulator kann der Hz freier dimensioniert werden, da der Pedalweg und der Kolbenweg nicht fest gekoppelt sind. In der Regel wird ein um ca. 20-30% größere Kolbenweg verwendet und zugleich der gesamte Kolbenweg für die Bremsung bei hohen Blockierdrücken inklusive Fading genutzt. Dadurch sind HZ Kolbenflächen von lediglich 50% der konventionellen Auslegung möglich, wodurch kleinere Pedalkräfte zur Erzeugung des notwendigen Bremsdrucks ausreichen. Für ein Wegsimulatorsystem bieten sich besonders elektromotorische Bremskraftverstärker an wie sie in DE 102005018649.19 und DE 102006059840.7 beschrieben werden. Diese Lösungen haben bei entsprechender Ausgestaltung den zusätzlichen Vorteil, dass die Reibungs- und Rückstellkräfte des Elektromotors sehr klein sind, was ca. 50% kleinere Ansprechkräfte bewirkt. Somit ist die Kraft-Weg-Kennlinie des Pedals bei Ausfall des elektromotorischen BKV im Vergleich zur wirksamen Bremskraftverstärkung nicht so stark unterschiedlich. Trotz dieser Vorteile sind analog zur Hz-Dimensionierung der anfangs beschriebenen konventionellen Bremsanlage vom Kleinwagen bis zum schweren SUV mehrere Hauptbremszylindergrößen notwendig, um die diversen Volumenaufnahmen abzudecken. Die großen Hauptbremszylinderkolbenflächen für schwere Fahrzeuge bewirken sehr hohe Pedalkräfte.

Aufgabe der Erfindung ist es, eine Bremsanlage bereitzustellen, die für mehrere Fahrzeuggrößen einsetzbar ist, wobei auch bei schweren Fahrzeugklassen nur geringe Pedalkräfte aufzubringen sind.

Diese Aufgabe wird erfindungsgemäß mit einer Bremsanlage mit den Merkmalen des Anspruchs 1 gelöst. Weitere vorteilhafte Ausführungsformen ergeben sich durch die Merkmale der rückbezogenen Ansprüche.

Der Erfindung liegt der Gedanke zugrunde, bei einer Bremsanlage nur einen im Durchmesser kleineren Hauptbremszylinder mit einer z.B. für eine kleinere Fahrzeugklasse ausreichenden Hauptbremszylindergröße auch für größere Fahrzeuge zu verwenden. Dies ist insbesondere bei einer elektromotorischen Bremsanlage möglich, sofern das Volumen der Arbeitsräume des Hauptbremszylinders durch Nachfördern quasi vergrößert wird. Das Nachfördern erfolgt dabei immer dann, wenn die Kolben des Hauptbremszylinders beim Bremsen fast ihre Endstellung erreicht haben und ein weiterer Druckaufbau nicht mehr möglich ist. Vor dem Nachfördern erfolgt ein Abkuppeln der Bremskreise mittels der ohnehin vorhandenen Ventile. Dann verfährt der Kolbenantrieb des Hauptbremszylinders den/die Kolben zurück, wobei gleichzeitig zusätzliche Bremsflüssigkeit in den/die Arbeitsraum bzw. -räume des Hauptbremszylinders aus mindestens einem Vorratsbehälter gefördert wird. Sobald der Nachförderprozess beendet ist, kann der Hauptbremszylinder wieder an die Bremskreise angekoppelt und der Druck in den Bremskreise weiter erhöht werden. Hierzu wird jede Fördereinrichtung wieder mittel des geschalteten Ventile vom Bremskreis getrennt bzw. abgekoppelt.

Die Erfindung sieht vorteilhaft mindestens eine zusätzliche Fördereinrichtung bestehend aus einem Vorratsbehältnis und einem Ventil vor. Sofern der Hauptbremszylinder einen oder zwei Arbeitsräume aufweist, kann dieser eine oder beide Arbeitsräume über eine einzige Fördereinrichtung befüllt werden. Um vorteilhaft eine Entkopplung der Arbeitsräume zu gewährleisten, ist es jedoch vorteilhaft, jedem Arbeitsraum des Hauptbremszylinders jeweils mindestens eine Nachfördereinrichtung zuzuordnen.

Für schwere Fahrzeuge kann somit ein Hauptbremszylinder mit reduziertem Durchmesser verwendet werden, bei dem das Hauptbremszylinder-Volumen relativ zur Volumenaufnahme der Radbremsen unterdimensioniert ist. Aus einem Vorratsbehälter kann durch das Vorsehen einer Fördereinrichtung für extreme Druckanforderungen bei Bedarf das benötigte Zusatzvolumen an Bremsflüssigkeit abgerufen werden, welches vom elektromotorisch betriebenem BKV anschließend in die Bremskreise nachgefördert wird.

Der Bedarf für eine Nachförderung wird durch den zurückgelegten Hauptbremszylinder-Weg und dem aufgebauten Druck erkannt. Ist z.B. bei 140 bar der Kolbenweg erschöpft, so wird aus der Nachförderkammer zusätzliche Bremsflüssigkeit in den Hz gefördert, damit der Druck bis zum Maximaldruck erhöht werden kann.

Dadurch ist es möglich vom Kleinwagen bis zum SUV den selben Hauptbremszylinder einzusetzen. Ab der Fahrzeugklasse bei welcher das Hauptbremszylindervolumen nicht mehr zur Abdeckung sämtlicher Extremsituationen ausreicht, muss die zusätzliche Fördereinrichtung installiert werden. Durch die Hauptbremszylinderdimensionierung wird bestimmt, ab welcher Klasse eine Fördereinrichtung notwendig ist. Durch die kleine Hauptbremszylinder-Kolbenfläche profitieren hohe Fahrzeugklassen bei einem Ausfall des Bremskraftverstärkers von wesentlich kleineren Pedalkräften als bei konventionellen Systemen. Das Pedalgefühl weicht somit nicht so stark vom Normalfall bei intakter Bremskraftverstärkung ab, wodurch der Fahrer weniger irritiert wird.

Durch die Standardisierung und Reduzierung der Varianten sind erhebliche Kostenreduzierungen für die Herstellung und geringere Logistikkosten für die Beschaffung und Ersatzteilhaltung möglich. Die Realisierung der Nachförderkomponente ist einfach und damit auch zuverlässig. Zudem ist die Funktion diagnostizierbar.

Vorteilhaft ist bzw. sind die Fördereinrichtungen unmittelbar am oder im Gehäuse des elektromotorisch angetriebenen Bremskraftverstärkers angeordnet bzw. integriert.

Die Nachförderkammer kann noch für eine weitere Funktion genutzt werden, zur Einstellung des Bremsbelagspiels.

Anliegende Bremsbeläge verursachen einen erheblichen zusätzlichem Kraftstoffverbrauch. In dieser Anmeldung ist beschrieben wie durch Unterdruck in der Bremsleitung und Bremskolben und durch gezielte Kolbensteuerung und Ansteuerung der Schaltventile dies erreicht wird. Bei dieser Anmeldung ist die Ansteuerung sehr komplex, wenn nicht der Kolben aus der Anfangsstellung zurückgefahren werden kann, da dies bei dem elektromotorischem Bremskraftverstärker konstruktiven Mehraufwand bedeutet. Dagegen ist es mit der Nachförderkammer einfach indem ein entsprechendes Volumen kurzzeitig vom HZ in diese Kammer gefördert wird und mit entsprechender Ventilschaltung der HZ Kolben zurückbewegt wird um den Unterdruck in vorzugsweise einem Radzylinder zu erzeugen. Die restlichen Radzylinder werden hintereinander bedient. Dabei kann bei Messung des Unterdruckes über den Druckgeber und entsprechender Wegsteuerung des Druckstangenkolbens ein Lüftspiel im Radzylinder erzeugt werden. Dieses Bremslüftspiel kann bei oder auch vor einer Bremsung jederzeit wieder eliminiert werden. So können aufgrund eines externen Signals bereits vor Beginn der Bremsung die Bremsbeläge wieder an die Bremsscheibe angelegt werden. Durch diese sogenannte Vorfüllung ist es möglich den Bremsweg zu verkürzen, insbesondere wenn der Vorfülldruck bereits ein Druckniveau von 5 bar erreicht.

Nachfolgend werden anhand von Zeichnungen zwei mögliche Ausführungsformen der Erfindung näher erläutert.

Es zeigen:
- Fig. 1:: Bremsanlage gemäß einer ersten Ausführungsform mit je einer Fördereinrichtung für jeden Arbeitsraum des Hauptbremszylinders;
- Fig. 1a:: Weg-Druck-Diagramm für die Bremsanlage gem. Fig. 1 zwei Kraftfahrzeuge mit unterschiedlichen Volumina der Rad- bremsen;
- Fig. 2:: Bremsanlage gemäß einer zweiten Ausführungsform mit ei- ner gekoppelten Fördereinrichtung für beide Arbeitsräu- me des Hauptbremszylinders;
- Fig. 3:: Bremsanlage gemäß einer ersten Ausführungsform mit je einem Magnetventil zwischen den Arbeitsräumen des Hauptbremszylinders und dem Vorratsbehälter

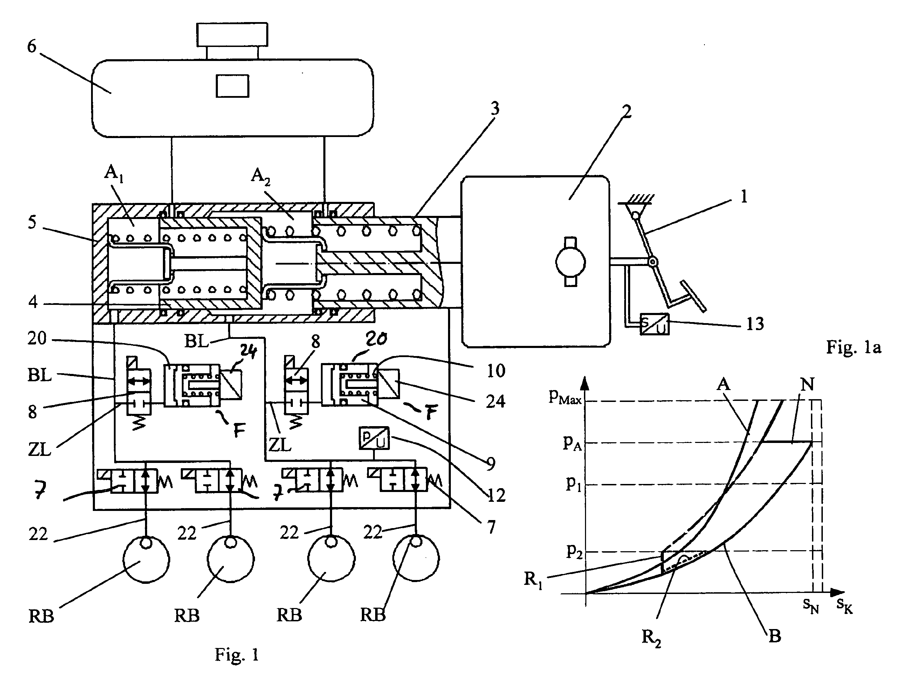

Die Figur 1 zeigt den prinzipiellen Aufbau eines el. mot. BKV wie er in der DE 102005018649.19, DE 102006059840.7 und DE 102005003648 beschrieben ist, wobei sich diese Anmeldung deren Offenbarungsgehalt vollumfänglich zu eigen macht. Bei intaktem BKV ist das Pedal vom Hz entkoppelt. Die Pedalkraft wird vom nicht dargestellten Wegsimulator aufgenommen, welcher ein gewohntes Pedalgefühl generiert. Der Pedalhubsensor 11 erfasst den Pedalhub welcher über einer Kennlinie einem gewünschten Bremsdruck zugeordnet werden kann. Somit wird durch Betätigung des Bremspedals 1 der Bremskraftverstärker 2 aktiviert, welcher auf den Druckstangenkolben 3 des Hauptbremszylinders 5 wirkt. Durch die Volumenverdrängung und den Druck wird der Schwimmkolben 4 bewegt. Beide Kolben 3 und 4 bewirken die Druckerzeugung in den jeweiligen Bremskreisen. Die entsprechende Bremsflüssigkeit wird im Vorratsbehälter bereitgestellt. Zu Details des Aufbaus des bekannten Hauptbremszylinders wird auf die DE 102005018649.19, DE 102006059840.7 und DE 102005003648 verwiesen. Bekanntlich können der Pedalweg und der Kolbenweg bei Wegsimulatorsystemen unterschiedlich sein. Der Kolben eilt bei Bremsungen auf hohem Reibwert dem Pedal voraus. Kommt nun der Kolben 3, 4 in den Bereich des Hubendes findet der Nachförderprozess statt. Dabei werden zunächst die Regelventile 7 geschlossen und der erreichte Druck wird in den Radbremsen eingesperrt. Anschließend werden die Nachförderventile 8 geöffnet. Gleichzeitig wird der Druckstangenkolben 3 durch den elektromotorischen BKV zurückgefahren wodurch der Druck im Hauptbremszylinder gegen Null (0) sinkt. Aus den bereits befüllten Nachförderkammern 20 wird die gespeicherte Bremsflüssigkeit mittels der Feder 10 und des Kolbens 9 in die Arbeitsräume A₁, A₂ des Hauptbremszylinders gefördert. In der Nachförderkammer 20 herrscht vorzugsweise Überdruck, z.B. 5 bar, sodass die Bremsflüssigkeit aktiv in den Hauptbremszylinder gefördert wird. Anschließend werden die Nachförderventile 8 geschlossen und die Regelventile 7 geöffnet. Durch eine entsprechende Motoransteuerung wird die Bremsflüssigkeit nun in die Bremskreise 22 verdrängt wodurch der Druck in den jeweiligen Bremskreisen 22, je nach Stellung der Ventile 7, weiter ansteigt. Somit ist ein weiterer Druckanstieg möglich ohne dass die Kolben 3 und 4 in den Endbereich (linke Stellung) gelangen. Wahlweise kann auch nur in einem Bremskreis 22 nachgefördert werden. Durch entsprechende Auslegung von Kolbenfläche und Kolbenhub kann in der Nachförderkammer 20 das fehlende Volumen im Hz zur Abdeckung sämtlicher Extremfälle vorgehalten werden. Durch die Vorspannung der Feder 10 beträgt der Fülldruck z.B. 5 bis 10 bar bei entsprechender Federauslegung. Gemeinsam mit einem Nachförderventil 8 mit großem Öffnungsquerschnitt wird somit ein schnelles Nachfördern in die Arbeitsräume A₁, A₂, in z.B. 50 ms ermöglicht, wodurch eine nennenswerte Verzögerung des Druckanstiegs vermieden wird.

Die Nachförderventile 8 sollten Durchfluss- und Schaltzeit optimiert sein. Die Ventile 8, welche vorzugsweise stromlos geschlossen ausgeführt werden, können einen großen Ventilsitzquerschnitt aufweisen. Durch den Einsatz einer gewöhnlichen Spule kann das Ventil 8 somit nur bei mittleren Drücken, wie z.B. 50 bar, öffnen. Dies ist für das Nachfördern kein Nachteil, da das Schalten der Nachförderventile bei ca. 10 bar stattfindet. Somit sind für das Nachförden keine teuren druckausgeglichenen Ventile notwendig. Aus Zeitgründen kann es auch sinnvoll sein, dass beim Nachfördern nicht das gesamte Volumen im Nachförderblock 20 in einem Zug nachgefördert wird. Nähert sich z.B. bei 140 bar der Kolben 3, 4 der Endstellung, kann zunächst Volumen für einen Druckaufbau auf 170 bar nachgefördert werden. Soll der Druck weiterhin steigen kann bei 170 bar in einem neuen Nachförderschritt das restliche Volumen für z.B. 200 bar Maximaldruck nachgefördert werden. Da für den Großteil der Fälle der erste Nachfördeschritt ausreicht kann somit für diese Bremsungen die Totzeit im Druckaufbau während des Nachförderns reduziert werden.

Die Nachförderkammer 20 kann nach Befüllung am Bandende bzw. beim Service, bei jedem Fahrzeugstart oder auch in Beschleunigungsphasen befüllt und diagnostiziert werden. Dazu wird über den Motorantrieb vorzugsweise der Maximaldruck in der Nachförderkammer z.B. 10 bar druckgeregelt eingesteuert. Wird nun das Nachförderventil 8 geöffnet darf sich der Druckstangenkolben 3 nicht bewegen. Falls dies doch der Fall ist deutet dies auf ein Leck in der Kolbendichtung oder ein undichtes Nachförderventil 8 hin. Über den Kolbenweg s_{K} kann das Differenzvolumen festgestellt werden. Durch das Differenzvolumen und die Diagnoseintervalle kann festgestellt werden, in welchem Ausmaß die Leckage stattfindet. Dazu wird im Hauptbremszylinder der maximale Nachförderdruck eingeregelt. Zudem kann nun diagnostiziert werden, ob das Nachförderventil 8 bzw. der Kolben 9 klemmen. Sobald der Nachförderblock 20 wieder aufgefüllt ist, wird der Kolben 3 zurückgefahren. Am Verlauf der Druck-Volumen-Kennlinie kann nun festgestellt werden, ob sich der Nachförderkolben 9 mit bewegt und ob das Nachförderventil 8 geschaltet hat.

Alternativ kann der Füllzustand der Nachförderkammer 20 geprüft werden, indem die Regelventile 7 geschlossen werden, im Hz der maximale Fülldruck der Nachförderkammer 20 z.B. 10 bar eingestellt wird, die Kolbenstellung als Stellgröße eingeregelt wird, die Nachförderventile 8 geöffnet werden und durch den Drucksensor 12 überwacht wird, ob der Druck im Hz abfällt.

Durch die Anpassung des Nachfördervolumens ist es somit möglich das selbe Grundsystem für mehrere Fahrzeugklassen zu verwenden. Bei konventionellen Lösungen bestehend aus Hz und Vakuum BKV muss für jede Fahrzeugklasse eine individuelle Dimensionierung verwendet werden, was Mehrkosten für die Logistik bei Produktion und Reparatur bedeutet.

Außerdem entstehen bei Ausfall der Bremskraftverstärkung durch die kleineren Kolbendurchmesser erheblich kleinere Pedalkräfte.

Da bei dem Wegsimulatorsystem der Entlüftungszustand der Bremsanlage über die Druck-Volumen-Kennlinie regelmäßig überprüft werden kann,. kann das Gesamtvolumen der Bremsenbetätigung, bestehend aus Hauptbremszylindervolumen und Nachförderblockverdrängungsvolumen, insgesamt im Vergleich zu konventionellen Systemen reduziert werden. Das zusätzliche Sicherheitsvolumen für schlecht entlüftete Volumen muss nicht mehr vorgesehen werden, wie es bei konventionellen Systemen der Fall ist.

Eine weitere Möglichkeit zur Überwachung des Füllzustandes der Nachförderkammer 20 ist der Einsatz eines optionalen Sensors 24. Dieser Sensor erfasst die Position des Kolbens 9. Der Sensor 24 kann als wegauflösender Sensor oder als Schalter ausgeführt werden, welcher eine Position des Kolbens 9 erfasst. Dieser Sensor kann zur Diagnose genutzt werden oder zur definierten Kolbensteuerung damit für die Funktion der Unterdruckerzeugung ausreichend Volumen bereitgestellt werden kann.

Figur 1a zeigt den Druckverlauf p über den Kolbenweg s_{N} des Druckstangenkolbens 3 für einen Kleinwagen A und einen Sport Utility Vehicle (SUV) B. Beide Fahrzeuge verwenden den selben Hauptbremszylinder. Die gestrichelte Linie zeigt die Begrenzungen bei p_{MAX} und Ende des Kolbenweges. Der Kleinwagen erreicht bei 40% Kolbenweg schon den Blockierdruck p₁ bei einer Bremsung auf trockenem Asphalt. Dagegen hat das SUV mit Kurve B eine deutlich höhere Volumenaufnahme, d.h. Kolbenweg, so dass p_{A} bei z.B. 70% Kolbenweg s_{N} erreicht ist. Zu erwähnen ist erneut, dass durch den Einsatz des Wegsimulators 2 in beiden Fällen der maximale Pedalhub auf z.B. 40% begrenzt ist. Der Hz-Kolben eilt dem Pedal voraus und der reale Kolbenhub ist am Pedal 1 nicht erkennbar. Mit dem Hz-Volumen eines Kleinwagens können beim SUV z.B. 140 bar erreicht werden. Wird bei B der Druck z.B. bei Fading noch weiter gesteigert, so wird bei Erreichen von s_{N} durch den bereits beschriebene Nachförderprozess N Zusatzvolumen für den Druckanstieg auf z.B. 200 bar bereitgestellt. In der Figur 1a wird ersichtlich, wie sich der Kolben 3, 4 zurückbewegt und anschließend bis auf p_{Maz} Druck aufbauen kann.

Bei Zurücknahme des Bremsdruckes wird bei einem Druck p₂ oder bei einer geeigneten Kolbenstellung das Zusatzvolumen wieder in den Nachförderblock 20 zurückverdrängt. Dieser Prozess wird als Rückfördern bezeichnet und ist in Figur 1a mit R1 bezeichnet. Während dem Druckabbau z.B. bei 50 bar werden bei geöffneten Regelventilen 7 die Nachförderventile 8 geöffnet. Somit werden die Nachförderkammern 20 durch den hohen Differenzdruck am Nachförderventil 8 schnell befüllt. Der Druckabbau am Rad muss somit für den Rückförderprozess nicht unterbrochen werden. Allerdings ist hierbei ein abrupter Druckabfall an den Radbremsen die Folge, was evtl. für den Fahrer spürbar ist. Um dies zu vermeiden kann mittels dem Druckgeber 12 und PWM Ansteuerung der Nachförderventile der Druckabbaugradient oder auch die Füllgeschwindigkeit der Nachförderkammer 20 variiert werden.

In Figur 1a ist mit R2 ein alternativer Rückförderprozess dargestellt. Beim Druckabbau. werden zunächst die Regelventile 7 geschlossen und die Nachförderventile 8 geöffnet. Nun kann durch eine entsprechende Bewegung des Hz-Kolbens 3 das nachgeförderte Zusatzvolumen wieder in die Fördereinrichtung verdrängt werden. Anschließend werden die Regelventile 7 wieder geöffnet und der Druckabbau in den Radbremsen kann fortgesetzt werden. Während dieser Rückförderphase findet an den Radbremsen kein Druckabbau statt. Deshalb ist es auch hier wieder wichtig, dass dieser Prozess schnell erfolgt, damit der Fahrer keine Unterbrechung des Druckabbaus spürt.

Während des Rückförderns ist wie beim Nachfördern für den Fahrer keine Rückwirkung am Pedal zu erkennen. Durch dieses geregelte Rückfördern in die Nachförderkammer 20 kann sichergestellt werden, dass der Druck in Ausgangsstellung von Druckstangenkolben 3 und Schwimmkolben 4 nahezu dem Umgebungsdruck entspricht, sodass die Primärmanschetten 23 differenzdruckfrei über die Zulauföffnungen 21 zum Vorratsbehälter 6gleiten. Diese Tatsache ist erforderlich um eine ausreichende Lebensdauer eines sogenannten Plunger-Zylinders, wie in Figur 1 dargestellt, zu gewährleisten. Somit kann auf den Einsatz eines teureren und größeren Hauptbremszylinders mit sogenanntem Zentralventil verzichtet werden, welche derzeit bei Bremsanlagen mit ESP-Ausrüstung verwendet werden müssen.

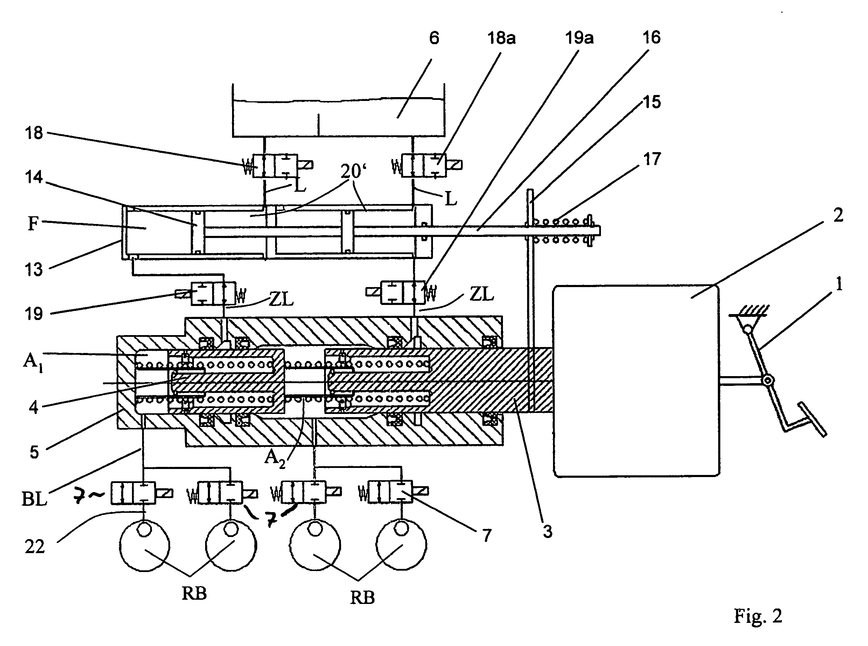

Die Figur 2 zeigt eine alternative zweite Ausführungsform der Erfindung, bei der ebenfalls aus einer Nachförderkammer Volumen in den Hauptbremszylinder nachgefördert wird.

Diese Einrichtung besteht aus einem Zylinder 13 welcher zwei Kolben enthält, die über eine Stange 16 über einem Mitnehmer an den Antrieb des Kolbens 3 angekoppelt sind. Bei Vorwärtsbewegung zum Druckaufbau wirkt der Antrieb direkt auf den Kolben 14 , bei der Rückwärtsbewegung wird die Stange 16 über die Feder 17 mitgenommen. Dies dient der Sicherheit, damit z.B. bei Fehlfunktion der Magnetventile oder Klemmen der Stange 16 der Kolben 3 wieder zum vollen Druckabbau in die Ausgangsstellung gelangen kann.

Zum Nachfördern sind zwei Schaltungen möglich. Auf der rechten Kolbenseite wird hierbei beim Zurückbewegen des Kolbens 3 das Magnetventil 18a und die Regelventile 7 geschlossen, wobei das Volumen über das offene Magnetventil 19a über die Lippendichtung in den Hauptbremszylinder 5 gelangt. Bei der anschließenden Vorwärtsbewegung wird das Magnetventil 19a wieder geschlossen und das Magnetventil 18a geöffnet, was zum weiteren Druckanstieg führt. Bei der linken Kolbenseite wird bei der Zurücknahme des Kolbens 3 bzw. 14 das Magnetventil 19 und die Regelventile 7 geschlossen und das Magnetventil 18 zum Nachsaugen aus dem Vorratsbehälter 6 geöffnet. Bei der Vorwärtsbewegung wird vom Kolben 14 das Volumen über die offenen Magnetventile 19 und 7 zur weiteren Drucksteigerung in den Hz gefördert.

Bei der Lösung nach Fig. 1 ist das Nachfördern auf das Volumen der Nachförderkammer 20 begrenzt. Dagegen kann mit der Lösung gem. Fig. 2 solange nachgefördert werden bis der Vorratsbehälter leer ist.

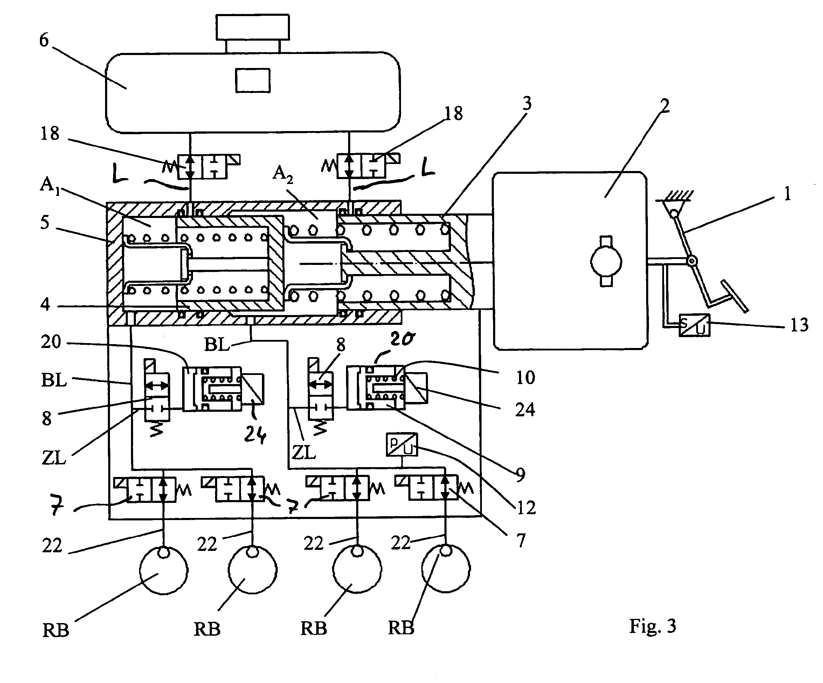

In Fig. 3 ist dargestellt, wie die Fördereinrichtung 20 genutzt werden kann, um an der Radbremse RB aktiv ein Belaglüftspiel einzustellen. Der Aufbau einer Radbremse RB ist allgemein bekannt und wird hier nicht näher erläutert. Vertiefend dazu siehe Bremsenhandbuch 2. Auflage, Vieweg 2004.

Zum Einstellen eines Belaglüftspiels zwischen Bremsscheibe und Bremsbelag wird im THZ 3,4,5 kurzzeitig ein Unterdruck erzeugt. Somit werden die Bremskolben in den Radbremsen aktiv zurückgezogen wodurch sich ein Abstand zwischen dem Bremsbelag und der Bremsscheibe einstellt. Dies hat zur Folge, dass die Restreibwirkung zwischen Bremsbelägen und Bremsscheibe eliminiert werden kann. Die Nachförderkammer 20, dessen Grundfunktion bereits in Fig. 1 erläutert wurde kann zur Erzeugung des Unterdrucks genutzt werden. Als Erweiterung zum Aufbau in Fig. 1 ist in Fig. 3 je ein Schaltventil 18 zwischen den Arbeitsräumen A1 und A2 des Hauptbremszylinders und dem Vorratsbehälter 6 platziert.

Die Nachförderkammern 20 sind im Normalbetrieb nicht komplett befüllt. Sie enthalten ausreichen viel Volumen um wie in Fig. 1 beschriebenen Fall Bremsflüssigkeit für hohe Druckanforderungen bereitzustellen, können aber noch zusätzliches Volumen aufnehmen.

Zu Beginn der Belaglüftspieleinstellung wird der Kolben 3 über den Motorantrieb 2 vorgefahren. Der Kolben 4 bewegt sich analog dazu.

Bei geöffneten Nachförderventilen 8 wird somit die Bremsflüssigkeit in die nur teilweise befüllten Nachförderkammern 20 verdrängt. Anschließend werden die Nachförderventile 8 geschlossen. Nun werden die Magnetventile 18 geschlossen und eines der Regelventile 7 geöffnet. Der Kolben 3 welcher sich immer noch in der ausgefahrenen Stellung befindet wird vom Motorspindeltrieb ein Stück Richtung Ausgangsstellung zurückgezogen. Dadurch entsteht Unterdruck, welcher sich über die Bremsleitung 22 auf die jeweilige Radbremse RB überträgt deren Regelventil 7 geöffnet ist. Nun werden die restlichen 3 Radbremsen durch sequentielles Öffnen der jeweiligen Regelventile zurückgezogen. Der Verfahrweg des Kolbens 3 ist über das Flächenverhältnis proportional zu dem Verfahrweg des Bremskolbens. In dieser Phase wird der Unterdruck ausgewertet, sodass erst unter einem Druckniveau oder zeitlichem Druckverlauf die Kolbenbewegung bewertet wird. Unter zeitlichem Druckverlauf ist gemeint, dass wenn der Unterdruck über die Kolbenreibung konstant ist, dies gleichbedeutend einer Bewegung des Bremskolbens entspricht. Abschließend werden die Magnetventile 18 wieder geöffnet. Somit wird der Unterdruck im THZ 5 aufgehoben. Die Aufgabe der Magnetventile 18 ist es, zu verhindern, dass während der Unterdruckphase im THZ Bremsflüssigkeit aus dem Behälter über die THZ Dichtungen in die Arbeitsräume A1 und A2 des THZ gelangt. Es ist auch möglich, alle Bremskolben der Radbremsen RB gleichzeitig zurückzuziehen, indem in der Unterdruckphase alle Regelventile 7 geöffnet werden.

Wie eingangs erwähnt sind die Nachförderkammern im Normalbetrieb nicht komplett befüllt, damit diese Volumen zur Belaglüftspieleinstellung aufnehmen können. Über den Sensor 24 kann der Befüllzustand überwacht werden. Alternativ ist es auch möglich die Nachförderkammern zunächst komplett zu befüllen und bei zurückgefahrenem Kolben 3, geschlossenen Regelventilen 7 und geöffneten Magnetventilen 18 die Nachförderventile 8 kurzzeitig zu öffnen um ein definiertes Volumen aus der Nachförderkammer entweichen zu lassen. Eine weitere Möglichkeit ist es die Nachförderkammern komplett zu entleeren und über den Kolbenhub 3 ein definiertes Volumen einzubringen. Dabei ist es von Vorteil, wenn die beiden Nachförderkammern 20 getrennt voneinander befüllt werden, sodass eine Kammer 20 immer voll ist und das Volumen für einen in Figur 1 beschriebenem Notfall bereitsteht.

Durch das eingestellte Belaglüftspiel besteht ein erhöhter Abstand zwischen dem Bremsbelag und der Bremsscheibe. Dieser würde bei einer Bremsung stören, da dies eine zusätzliche Volumenaufnahme und somit einen Verlustweg vom Kolben 3 verursacht. Somit ist es wichtig vor einer möglichen Bremsung die Bremsbeläge wieder an die Bremsscheibe anzulegen. Man spricht hierbei von einer Vorfüllung.

Dazu kann die Bremsflüssigkeit aus den Nachförderkammern 20 genutzt werden. Zunächst werden die Magnetventile 18 geschlossen, die Regelventile 7 geöffnet und anschließend die Nachförderventile 8 geöffnet. Die Federn 10 verdrängen über die Kolben 9 somit die Bremsflüssigkeit aus den Nachförderkammern 20 in die Radbremsen RB. Über die Position des Kolbens 9, welche der Sensor 24 liefert, kann das erforderliche Volumen geregelt werden. Alternativ kann das Vorfüllvolumen aus der Öffnungszeit der Nachförderventile und den Befülldruck der Nachförderkammer 20 eingestellt werden. Über den Drucksensor 12 kann auch erfasst werden wenn das Belaglüftspiel aufgehoben ist. Sobald die Bremsbeläge an der Bremsscheibe anliegen steigt der Druck im Bremskreis. Noch effektiver hinsichtlich Bremswegverkürzung ist eine Vorfüllung auf ca. 5 bar, was über einen externen Sensor, z.B. Pedalnäherungssensor, erfordert.

Ein Verfahren, welches anwendbar ist wenn bei eingestelltem Belaglüftspiel sich die Nachförderkammern 20 z.B. aufgrund einer Leckage entleert haben, sieht folgende Arbeitsschritte vor: Die Nachförderventile 8 bleiben zunächst geschlossen, die Regelventile 7 geöffnet. Der Kolben 3 wird vom Motorantrieb betätigt, sodass ein entsprechendes Volumen an Bremsflüssigkeit in die Bremskreise gefördert wird, bis die Bremsbeläge anliegen. Anschließend werden die Regelventile 7 geschlossen und der Kolben 3 wird wieder zurückgefahren. Somit entsteht Unterdruck in den Arbeitsräumen A1 und A2. Sobald der Kolben 3 seine Ausgangsstellung erreicht wird aufgrund des Unterdruckes das entsprechende Differenzvolumen aus dem Vorratsbehälter gesaugt.

### Bezugszeichenliste:

- 1: Bremspedal
- 2: Motorantrieb mit ,Wegsimulator
- 3: Druckstangenkolben DK
- 4: Schwimmkolben
- 5: Hauptbremszylinder Hz
- 6: Vorratsbehälter
- 7: Regelventile
- 8: Nachförderventil
- 9: Kolben
- 10: Feder
- 11: Pedalwegsensor
- 12: Drucksensor
- 13: Zylinder
- 14: Doppelkolben
- 15: Mitnehmer
- 16: Stange
- 17: Feder
- 18: Magnetventil
- 18a: Magnetventil
- 19: Magnetventil
- 19a: Magnetventil
- 20: Nachförderkammer
- 21: Zulauföffnungen
- 22: Bremskreis
- 23: Primärmanschette
- 24: Sensor
- pₘₐₓ: max. Bremsdruck
- p₁: Blockierdruck für µ=1.0 (trockene Asphalt)
- A₁, A₂: Arbeitsräume des HZ
- A: Druck - Weg Kennlinie für Kleinwagen
- B: Druck - Weg Kennlinie für SUV
- F: Fördereinrichtung
- L: Leitungen
- N: Nachförderung
- R1, R2: Rückförderung
- s_{K}: Kolbenweg des HZ
- s_{N}: Nachförderposition
- p₂: Füllung der Nachförderkammer
- BL: Bremsleitung
- ZL: Zuführleitung

## Patentansprüche

1. Bremsanlage mit einer elektromotorischen Antriebseinrichtung für einen Bremskraftverstärker (BKV, 3, 4, 5) mit mindestens einem Kolben (3, 4), wobei der mindestens eine Kolben (3, 4) von der Antriebseinrichtung zum Druckaufbau und zum Druckabbau in mindestens einer Radbremse (RB) angetrieben ist und nur bei einer Störung der Antriebseinrichtung mechanisch mittels einer Bremsbetätigungseinrichtung (1), insbesondere in Form eines Bremspedals verstellbar ist, wobei in der Bremsleitung (BL) zwischen jeder Radbremse (RB) und einem Arbeitsraum (A₁, A₂) des Bremskraftverstärkers (BKV) mindestens ein Abkopplungsventil (7) zum Verschließen und Öffnen der Bremsleitung (BL) angeordnet ist, **dadurch gekennzeichnet, dass** mindestens eine Fördereinrichtung (F) vorgesehen ist, die über mindestens eine Zuführleitung (ZL), welche jeweils mit einer Bremsleitung (BL) oder dem Bremskraftverstärker (BKV), insbesondere mit einem Arbeitsraum (A₁, A₂), verbunden ist, bei Bedarf aus einem Vorratsbehälter (20; 20') Bremsflüssigkeit in den jeweiligen Arbeitsraum (A₁, A₂) des Bremskraftverstärkers (BKV) fördert, wobei in jeder Zuführleitung (ZL) ein gesteuertes Ventil (8; 19, 19a) zum Öffnen und Verschließen der jeweiligen Zuführleitung (ZL) angeordnet ist.

2. Bremsanlage nach Anspruch 1, **dadurch gekennzeichnet, dass** die Fördereinrichtung (F) ein Kolbenzylindersystem ist, dessen mindestens einer Kolben (9; 14) von einem Antrieb oder einer Feder (10, 17) druckbeaufschlagt ist und der Antrieb bzw. die Feder den Förderdruck erzeugt, wobei ein Vorratsbehälter jeweils durch einen Arbeitsraum (20; 20') des Kolbenzylindersystems gebildet ist.

3. Bremsanlage nach Anspruch 1 oder 2, **dadurch gekennzeichnet, dass** jedem Arbeitsraum (A₁, A₂) eine Fördereinrichtung (F) zugeordnet ist.

4. Bremsanlage nach Anspruch 2 oder 3, **dadurch gekennzeichnet, dass** der Arbeitsraum (20; 20') des Kolbenzylindersystems der Fördereinrichtung (F) mittels des Bremskraftverstärkers (BKV) befüllbar ist.

5. Bremsanlage nach Anspruch 1 oder 2, **dadurch gekennzeichnet, dass** die Fördereinrichtung (F) ein Kolbenzylindersystem ist, dessen mindestens einer Kolben (14) vom Antrieb des Bremskraftverstärkers (BKV) angetrieben oder an dessen Kolben (3) angekoppelt ist.

6. Bremsanlage nach Anspruch 5, **dadurch gekennzeichnet, dass** der mindestens eine Kolben (14) des Kolbenzylindersystems über einen Mitnehmer (15, 16) an den angetriebenen Kolben (3) des Bremskraftverstärkers (BKV) angekoppelt ist.

7. Bremsanlage nach Anspruch 6, **dadurch gekennzeichnet, dass** der Mitnehmer (15) beim Druckaufbau im Bremskraftverstärker (BKV) den mindestens einen Kolben (14) des Kolbenzylindersystems der Fördereinrichtung (F) mittels eines Formschlusses mitnimmt, wobei beim Druckabbau im Bremskraftverstärker (BKV) der Mitnehmer (15) lediglich über ein Federelement (17) den bzw. die Kolben (14) der Fördereinrichtung (F) mitnimmt.

8. Bremsanlage nach einem der Ansprüche 5 bis 7, **dadurch gekennzeichnet, dass** jeder Arbeitsraum (20') des Kolbenzylindersystems über eine Leitung (L) mit dem Vorratsbehälter (6) der Bremsanlage in Verbindung ist, wobei in der Leitung (L) ein gesteuertes Absperrventil (18, 18a) zur wahlweisen Unterbrechung der Leitung (L) angeordnet ist.

9. Bremsanlage nach einem der vorhergehenden Ansprüche, **dadur**ch **gekennzeichnet**, dass das Schaltventil (8) in der Zuführleitung (ZL) für Niederdruck ausgelegt ist und einen großen Durchlassquerschnitt aufweist.

10. Bremsanlage nach einem der vorhergehenden Ansprüche, **dadurch gekennzeichnet, dass** ein Sensor (24) die Position des Kolbens (9) einer Nachförderkammer (20) ermittelt.

11. Verfahren zum Betrieb einer Bremsanlage nach einem der vorhergehenden Ansprüche, **dadurch gekennzeichnet, dass** während des Nachförderns von Bremsflüssigkeit in einen Arbeitsraum (A₁, A₂) des Bremskraftverstärkers (BKV) die mit dem Arbeitsraum (A₁, A₂) verbundenen Radbremsen (RB) mittels der Abkoppelventile (7) von dem Arbeitsraum (A₁, A₂) zum Druckerhalt abgekoppelt sind, und gleichzeitig das Ventil (8, 19, 19a) in der Zuführleitung (ZL) geöffnet ist und durch Zurückfahren des bzw. der Kolben(s) des Bremskraftverstärkers (BKV) dessen Arbeitsraum bzw. -räume vergrößert wird bzw. werden.

12. Verfahren nach Anspruch 11, **dadurch gekennzeichnet, dass** zur Reduzierung der Totzeit beim Bremsdruckaufbau mehrfach mittels einer oder mehrerer Fördereinrichtung(-en) (F) Bremsflüssigkeit nachgefördert wird.

13. Verfahren nach Anspruch 11 oder 12, **dadurch gekennzeichnet, dass** zum Wiederbefüllen des Vorratsbehälters (20, 20') der Fördereinrichtung (F) die mit dem jeweiligen Arbeitsraum (A₁, A₂) verbundenen Radbremsen (RB) mittels der Abkoppelventile (7) von dem Arbeitsraum (A₁, A₂) abgekoppelt sind und durch Druckaufbau im Bremskraftverstärker (BKV) Bremsflüssigkeit vom Arbeitsraum (A₁, A₂) des Bremskraftverstärkers in den Vorratsbehälter (20, 20') gefördert wird, wobei nach dem Befüllvorgang das Ventil (8) in der Zuführleitung (ZL) in die geschlossene Stellung gestellt wird.

14. Verfahren nach Anspruch 11 oder 12, **dadurch gekennzeichnet, dass** beim Wiederbefüllen des Arbeitsraums (20') eines vom Antrieb des Bremskraftverstärkers (BKV) angetriebenen Kolbenzylindersystems, dass in der Leitung (L), welche den Arbeitsraum mit dem Vorratsbehälter (6) der Bremsanlage verbindet, angeordnete Ventil (18, 18a) geöffnet ist, und dass das in der Zuführleitung (ZL), welche den Arbeitsraum (20') der Fördereinrichtung (F) mit dem Bremskraftverstärker (BKV) verbindet, angeordnete Ventil (16) geschlossen ist.

15. Verfahren nach einem der Ansprüche 11 bis 14, **dadurch gekennzeichnet, dass** der Gradient des Druckabbaus in die Nachförderkammer durch PWM-Betrieb der Nachförderventile über den Druckgeber kontrolliert gesteuert wird.

16. Verfahren zum Betrieb einer Bremsanlage nach einem der Ansprüche 1 bis 10 oder nach einem der Ansprüche 11 bis 15, **dadurch gekennzeichnet, dass** zur Erzeugung eines Unterdrucks in den Arbeitsräumen (A₁, A₂) des Bremskraftverstärkers die Ventile (18, 18a) geschlossen werden und die Kolben (3, 4) des Bremskraftverstärkers zur Vergrößerung der Arbeitsräume (A₁, A₂) zurück gefahren werden, um insbesondere ein Belaglüftspiel in den Radbremsen (RB) bei gleichzeitig geöffneten Ventilen (7) einzustellen.

17. Verfahren zum Betrieb einer Bremsanlage nach einem der Ansprüche 1 bis 10 oder nach Anspruch 16, **dadurch gekennzeichnet, dass** ein Teil des Volumens im Hauptbremszylinders (5) in eine oder mehrere Nachförderkammer(n) (20) mittels des Hauptbremszylinders (5) bei geöffnetem Nachförderventil (8) verdrängt wird, wobei danach bei geschlossenem Nachförderventil (8) und geöffnetem Regelventil (7) die Bremskolben in den Radbremsen (RB) durch Zurückfahren der Kolben (3, 4) des Hauptbremszylinders (5) von den Bremsscheiben zur Erzielung eines Belaglüftspiels abgehoben werden.

18. Verfahren nach Anspruch 16 oder 17, **dadurch gekennzeichnet, dass** das Belaglüftspiel in den Radbremsen (RB) nacheinander oder gleichzeitig oder paarweise eingestellt wird.

19. Verfahren nach einem der Ansprüche 16 bis 18, **dadurch gekennzeichnet, dass** ein Ventil (18), welches in der den Vorratsbehälter (6) mit dem Hauptbremszylinder (5) verbindenden Leitung (L) angeordnet ist, während der Erzeugung eines Unterdruck durch Zurückfahren der Kolben (3,4) des Hauptbremszylinders (5) geschlossen ist.

20. Verfahren nach einem der Ansprüche 16 bis 19, **dadurch gekennzeichnet, dass** eine definierter Hub der Kolben (3,4) anhand des mittels eines Sensors (12) ermittelten Drucks in der Bremsleitung (BL) oder im Hauptbremszylinder (5) durchgeführt wird.

21. Verfahren nach einem der Ansprüche 16 bis 20, **dadurch gekennzeichnet, dass** der Kolben (9) der Nachförderkammer (20) sich in einer Zwischenstellung befindet, sodass diese weiteres Volumen für die Unterdrucksteuerung oder Einstellung des Belaglüftspiels aufnehmen kann.

22. Verfahren nach Anspruch 21, **dadurch gekennzeichnet, dass** diese Zwischenstellung durch gezielte Öffnungszeiten der Magnetventile (8) und Zurückgabe des Volumens in die Arbeitsräume (A₁, A₂) des Hauptbremszylinders (5) erfolgt, während der Zeiten, während nicht gebremst wird.

23. Verfahren nach einem der Ansprüche 16 bis 22, **dadurch gekennzeichnet, dass** die Einregelung der Zwischenstellung des Kolbens (9) einer Nachförderkammer (20) mittels des Positionsgeber (24) erfolgt

24. Verfahren nach einem der Ansprüche 16 bis 23, **dadurch gekennzeichnet, dass** das in einer Nachförderkammer (20) gespeicherte Volumen an Bremsflüssigkeit vor Beginn einer Bremsung durch einen externes Signal zur Vorfüllung der Bremse durch Öffnen des Nachförderventils (8) und optional eines oder aller Regelventile (7) bereitgestellt wird.

25. Verfahren nach Anspruch 24, **dadurch gekennzeichnet, dass** dieses Volumen bei der Unterdrucksteuerung so bemessen wird, dass bei der Vorfüllung der Bremse ein Druck von ca. 5 bar entsteht.

26. Verfahren nach einem der Ansprüche 16 bis 25, **dadurch gekennzeichnet, dass** zur Einstellung eines Bremslüftspiels zwischen Bremsscheibe und Bremsbelag einer Radbremse (RB) mittels der Kolben (3, 4) ein Unterdruck in den Arbeitsräumen (A₁, A₂) des Bremskraftverstärkers erzeugt wird, wobei gleichzeitig das jeweilige oder die Ventil(e) (7) geöffnet ist bzw. sind und die Leitung (L), welche den jeweiligen Arbeitsraum (A₁, A₂) des Bremskraftverstärkers mit dem Vorratsbehälter (6) oder der Nachfördereinrichtung (20') verbindet, mittels des Ventils (18; 19, 19a) verschlossen ist.

27. Verfahren nach Anspruch 16 bis 26, **dadurch gekennzeichnet, dass** zur Aufhebung des Belaglüftspiels die Ventile (18, 18a) geschlossen und danach die Ventile (7) sowie das jeweilige Ventil (8, 19, 19a) geöffnet wird.

28. Verfahren nach Anspruch 27, **dadurch gekennzeichnet, dass** bei einem eine Bremskraft bewirkenden Druck in der jeweiligen Bremsleitung (22) die Bremsleitung durch Öffnen der entsprechenden Ventile (18, 18a, 19, 19a) mit dem Vorratsbehälter (6) verbunden wird.

29. Verfahren nach einem der Ansprüche 16 bis 28, **dadurch gekennzeichnet, dass** zur Aufhebung des Bremslüftspiels die Ventile (8) geschlossen und das bzw. die Ventil(e) (7) geöffnet sind, wonach dann mittels der Kolben (3, 4) über die Bremsleitung (22) Hydraulikmedium in die Radbremse gefördert wird.

## Claims

1. A brake system with an electromotive drive device for a brake servo unit (BKW, 3, 4, 5) with at least one piston (3, 4), wherein the at least one piston (3, 4) is driven by the drive device for pressure build-up and pressure reduction in at least one wheel brake (RB) and is mechanically adjustable by means of a brake actuating device (1), in particular in the form of a brake pedal, only in the event of a malfunction of the drive device, wherein at least one decoupling valve (7) is arranged in the brake line (BL) between each wheel brake (RB) and a working space (A₁, A₂) of the brake servo unit (BKV) for the purpose of closing and opening the brake line (BL), **characterised in that** at least one delivery device (F) is provided, which delivers brake fluid as required from a reservoir (20; 20') into the respective working space (A₁, A₂) of the brake servo unit (BKW) by way of at least one supply line (ZL), which is connected in each case to a brake line (BL) or to the brake servo unit (BKV), in particular to a working space (A₁, A₂), wherein a controlled valve (8; 19, 19a) is arranged in each supply line (ZL) for the purpose of opening and closing the respective supply line (ZL).

2. A brake system according to Claim 1, **characterised in that** the delivery device (F) is a piston cylinder system whereof the at least one piston (9; 14) is subject to pressure by a drive or a spring (10, 17) and the drive or the spring generates the delivery pressure, wherein a reservoir is formed in each case by a working space (20; 20') of the piston cylinder system.

3. A brake system according to Claim 1 or 2, **characterised in that** a delivery device (F) is associated with each working space (A₁, A₂).

4. A brake system according to Claim 2 or 3, **characterised in that** the working space (20; 20') of the piston cylinder system of the delivery device (F) can be filled by means of the brake servo unit (BKV).

5. A brake system according to Claim 1 or 2, **characterised in that** the delivery device (F) is a piston cylinder system whereof the at least one piston (14) is driven by the drive of the brake servo unit (BKV) or is coupled to the piston (3) thereof.

6. A brake system according to Claim 5, **characterised in that** the at least one piston (14) of the piston cylinder system is coupled to the driven piston (3) of the brake servo unit (BKV) by way of a carrier (15, 16).

7. A brake system according to Claim 6, **characterised in that**, with the build-up of pressure in the brake servo unit (BKV), the carrier (15) carries the at least one piston (14) of the piston cylinder system of the delivery device (F) by means of form fit whilst, with the reduction in pressure in the brake servo unit (BKV), the carrier (15) simply carries the piston(s) (14) of the delivery device (F) by way of a spring element (17).

8. A brake system according to one of Claims 5 to 7, **characterised in that** each working space (20') of the piston cylinder system is in communication with the reservoir (6) of the brake system by way of a line (L), wherein a controlled stop valve (18, 18a) is arranged in the line (L) for the purpose of optionally interrupting the line (L).

9. A brake system according to one of the preceding claims, **characterised in that** the control valve (8) in the supply line (ZL) is designed for low pressure and has a large opening cross-section.

10. A brake system according to one of the preceding claims, **characterised in that** a sensor (24) determines the position of the piston (9) of a re-feed chamber (20).

11. A process for operating a brake system according to one of the preceding claims, **characterised in that**, as brake fluid is re-fed into a working space (A₁, A₂) of the brake servo unit (BKV), the wheel brakes (RB) connected to the working space (A₁, A₂) are decoupled from the working space (A₁, A₂) by means of the decoupling valves (7) for the purpose of maintaining pressure and, at the same time, the valve (8, 19, 19a) in the supply line (ZL) is opened and, by retracting the piston(s) of the brake servo unit (BKV), the working space or spaces thereof is/are increased.

12. A process according to Claim 11, **characterised in that** brake fluid is re-fed a plurality of times by means of one or more delivery device(s) (F) for the purpose of reducing the delay time during the build-up of brake pressure.

13. A process according to Claim 11 or 12, **characterised in that**, for refilling the reservoir (20, 20') of the delivery device (F), the wheel brakes (RB) connected to the respective working space (A₁, A₂) are decoupled from the working space (A₁, A₂) by means of the decoupling valves (7), and brake fluid is delivered from the working space (A₁, A₂) of the brake servo unit into the reservoir (20, 20') as a result of a build-up of pressure in the brake servo unit (BKV), wherein the valve (8) in the supply line (ZL) is moved into the closed position after the filling procedure.

14. A process according to Claim 11 or 12, **characterised in that**, during the refilling of the working space (20') of a piston cylinder system driven by the drive of the brake servo unit (BKV), the valve (18, 18a) arranged in the line (L) connecting the working space to the reservoir (6) of the brake system is opened, and **in that** the valve (16) arranged in the supply line (ZL) connecting the working space (20') of the delivery device (F) to the brake servo unit (BKV) is closed.

15. A process according to one of Claims 11 to 14, **characterised in that** the gradient of the pressure reduction in the re-feed chamber is controlled by PWM operation of the re-feed valves by way of the pressure indicator.

16. A process for operating a brake system according to one of Claims 1 to 10 or according to one of Claims 11 to 15, **characterised in that**, to generate a negative pressure in the working spaces (A₁, A₂) of the brake servo unit, the valves (18, 18a) are closed and the pistons (3, 4) of the brake servo unit are retracted for increasing the working spaces (A₁, A₂), particularly to adjust a lining clearance in the wheel brakes (RB) when valves (7) are simultaneously opened.

17. A process for operating a brake system according to one of Claims 1 to 10 or according to Claim 16, **characterised in that** part of the volume in the main brake cylinder (5) is displaced into one or more re-feed chamber(s) (20) by means of the main brake cylinder (5) when the re-feed valve (8) is opened, wherein the brake pistons in the wheel brakes (RB) are subsequently lifted off the brake discs by retracting the pistons (3, 4) of the main brake cylinder (5) for the purpose of achieving a lining clearance when the re-feed valve (8) is closed and the regulating valve (7) is opened.

18. A process according to Claim 16 or 17, **characterised in that** the lining clearance in the wheel brakes (RB) is adjusted in succession or simultaneously or in pairs.

19. A process according to one of Claims 16 to 18, **characterised in that** a valve (18) which is arranged in the line (L) connecting the reservoir (6) to the main brake cylinder (5) is closed during the generation of a negative pressure by retracting the piston (3, 4) of the main brake cylinder (5).

20. A process according to one of Claims 16 to 19, **characterised in that** a defined stroke of the pistons (3, 4) is carried out on the basis of the pressure in the brake line (BL) or in the main brake cylinder (5) determined by a sensor (12).

21. A process according to one of Claims 16 to 20, **characterised in that** the piston (9) of the re-feed chamber (20) is located in an intermediate position so that this can take in a further volume for controlling the negative pressure or adjusting the lining clearance.

22. A process according to Claim 21, **characterised in that** this intermediate position is achieved by specific opening times of the solenoid valves (8) and returning the volume into the working spaces (A₁, A₂) of the main brake cylinder (5) during the times when braking does not occur.

23. A process according to one of Claims 16 to 22, **characterised in that** the intermediate position of the piston (9) of a re-feed chamber (20) is regulated by means of the position indicator (24).

24. A process according to one of Claims 16 to 23, **characterised in that** the volume of brake fluid stored in a re-feed chamber (20) is provided before braking commences by an external signal for pre-filling the brake by opening the re-feed valve (8) and optionally one or all regulating valves (7).

25. A process according to Claim 24, **characterised in that** this volume during the negative pressure control is calculated such that a pressure of ca. 5 bar is produced during the pre-filling of the brake.

26. A process according to one of Claims 16 to 25, **characterised in that**, to adjust a brake clearance between the brake disc and brake lining of a wheel brake (RB) by means of the pistons (3, 4), a negative pressure is generated in the working spaces (A₁, A₂) of the brake servo unit, wherein the respective valve or the valves (7) is/are at the same time opened and the line (L) connecting the respective working space (A₁, A₂) of the brake servo unit to the reservoir (6) or the re-feed device (20') is closed by means of the valve (18; 19, 19a).

27. A process according to Claims 16 to 26, **characterised in that**, to eliminate the lining clearance, the valves (18, 18a) are closed and subsequently the valves (7) and the respective valve (8, 19, 19a) are opened.

28. A process according to Claim 27, **characterised in that**, at a pressure producing a braking force in the respective brake line (22), the brake line is connected to the reservoir (6) by opening the corresponding valves (18, 18a, 19, 19a).

29. A process according to one of Claims 16 to 28, **characterised in that**, to eliminate the brake clearance, the valves (8) are closed and the valve(s) (7) is/are opened, after which hydraulic medium is delivered into the wheel brake by means of the pistons (3, 4) by way of the brake line (22).

## Revendications

1. Installation de freinage comprenant un système d'entraînement à moteur électrique pour un amplificateur de force de freinage (BKV, 3, 4, 5) avec au moins un piston (3, 4), ledit au moins un piston (3, 4) est entraîné par le système d'entraînement pour la montée en pression et pour la réduction de pression dans au moins un frein de roue (RB) et est capable d'être entraîné mécaniquement, uniquement en cas de perturbation du système d'entraînement, au moyen d'un système d'entraînement de frein (1), en particulier sous la forme d'une pédale de frein, dans lequel au moins une vanne de découplage (7) pour obturer et pour ouvrir la conduite de freinage (BL) est agencée dans la conduite de freinage (BL) entre chaque frein de roue (RB) et une chambre de travail (A1, A2) de l'amplificateur de force de freinage (BKV),
**caractérisée en ce que**
il est prévu au moins un système d'alimentation (F), qui alimente en cas de besoin du liquide de freinage provenant d'un récipient de réserve (20 ; 20') vers la chambre de travail respective (A1, A2) de l'amplificateur de force de freinage (BKV), via au moins une conduite d'alimentation (ZL), qui est respectivement reliée à une conduite de freinage (BL) ou à l'amplificateur de force de freinage (BKV), en particulier à une chambre de travail (A1, A2), et dans chaque conduite d'alimentation (ZL) est agencée une vanne commandée (8 ; 19, 19a) pour ouvrir et pour fermer la conduite d'alimentation respective (ZL).

2. Installation de freinage selon la revendication 1, **caractérisée en ce que** le système d'alimentation (F) est un système à piston-et-cylindre, dont ledit au moins un piston (9 ; 14) est attaqué en pression par un entraînement ou par un ressort (10, 17), et l'entraînement ou le ressort engendre la pression d'alimentation, et un récipient de réserve est formé respectivement par une chambre de travail (20 ; 20') du système à piston-et-cylindre.

3. Installation de freinage selon la revendication 1 ou 2, **caractérisée en ce qu'**un système d'alimentation (F) est associé à chaque chambre de travail (A1, A2).

4. Installation de freinage selon la revendication 2 ou 3, **caractérisée en ce que** la chambre de travail (20 ; 20') du système à piston-et-cylindre du système d'alimentation (F) peut être remplie au moyen de l'amplificateur de force de freinage (BKV).

5. Installation de freinage selon la revendication 1 ou 2, **caractérisée en ce que** le système d'alimentation (F) est un système à piston-et-cylindre, dont ledit au moins un piston (14) est entraîné par l'entraînement de l'amplificateur de force de freinage (BKV) ou est accouplée à son piston (3).

6. Installation de freinage selon la revendication 5, **caractérisée en ce que** ledit au moins un piston (14) du système à piston-et-cylindre est accouplé via un élément d'entraînement (15, 16) au piston entraîné (3) de l'amplificateur de force de freinage (BKV).

7. Installation de freinage selon la revendication 6, **caractérisée en ce que**, lors de la montée en pression dans l'amplificateur de force de freinage (BKV), l'élément d'entraînement (15) entraîne ledit au moins un piston (14) du système à piston-et-cylindre du système d'alimentation (F) au moyen d'une coopération de formes, et lors de la réduction de pression dans l'amplificateur de force de freinage (BKV) l'élément d'entraînement (15) entraîne le ou les piston(s) (14) du système d'alimentation (F) uniquement via un élément de ressort (17).

8. Installation de freinage selon l'une des revendications 5 à 7, **caractérisée en ce que** chaque chambre de travail (20') du système à piston-et-cylindre communique avec le récipient de réserve (6) de l'installation de freinage via une conduite (L), et une vanne d'isolement commandée (18, 18a) est agencée dans la conduite (L) pour interrompre sélectivement la conduite (L).

9. Installation de freinage selon l'une des revendications précédentes, **caractérisée en ce que** la vanne de commutation (8) dans la conduite d'alimentation (ZL) est conçue pour des basses pressions et présente une section passante élevée.

10. Installation de freinage selon l'une des revendications précédentes, **caractérisée en ce qu'**un capteur (24) détecte la position du piston (9) dans une chambre de réalimentation (20).

11. Procédé pour le fonctionnement d'une installation de freinage selon l'une des revendications précédentes, **caractérisé en ce que**, pendant la réalimentation de liquide de freinage dans une chambre de travail (A1, A2) de l'amplificateur de force de freinage (BKV), les freins de roue (RB) reliés à la chambre de travail (A1, A2) sont découplés, au moyen des vannes de découplage (7), vis-à-vis de la chambre de travail (A1, A2) en vue du maintien en pression, et simultanément la vanne (8, 19, 19a) dans la conduite d'alimentation (ZL) est ouverte, et par rétraction du ou des piston(s) de l'amplificateur de force de freinage (BKV) sa chambre de travail ou ses chambres de travail est/sont agrandie(s).

12. Procédé selon la revendication 1, **caractérisé en ce que** pour réduire le temps mort lors de l'établissement de la pression de freinage, du liquide de freinage est réalimenté plusieurs fois au moyen d'un ou plusieurs système(s) d'alimentation (F).

13. Procédé selon la revendication 11 ou 12, **caractérisé en ce que**, pour le reremplissage du récipient de réserve (20, 20') du système d'alimentation (F), les freins de roue (RB) reliés à la chambre de travail respectif (A1, A2) sont découplés de la chambre de travail (A1, A2) au moyen des vannes de découplage (7), et par montée en pression dans l'amplificateur de force de freinage (BKV) du liquide de freinage est alimenté depuis la chambre de travail (A1, A2) de l'amplificateur de force de freinage jusque dans le récipient de réserve (20, 20'), et après l'opération de remplissage la vanne (8) dans la conduite d'alimentation (ZL) est mise dans la position fermée.

14. Procédé selon la revendication 11 ou 12, **caractérisé en ce que** lors du reremplissage de la chambre de travail (20') d'un système à piston-et-cylindre entraîné par l'entraînement de l'amplificateur de force de freinage (BKV), la vanne (18, 18a) agencée dans la conduite (L) qui relie la chambre de travail au récipient de réserve (6) de l'installation de freinage, est ouverte, et **en ce que** la vanne (16) agencée dans la conduite d'alimentation (ZL), qui relie la chambre de travail (20') du système d'alimentation (F) à l'amplificateur de force de freinage (BKV), est fermée.

15. Procédé selon l'une des revendications 11 à 14, **caractérisé en ce que** le gradient de la diminution de pression dans la chambre de réalimentation est commandé de façon contrôlée par fonctionnement des vannes de réalimentation en modulation de largeur d'impulsion via l'émetteur de pression.

16. Procédé pour le fonctionnement d'une installation de freinage selon l'une des revendications 1 à 10 ou selon l'une des revendications 11 à 15, **caractérisé en ce que**, pour engendrer une dépression dans les chambres de travail (A1, A2) de l'amplificateur de force de freinage, les vannes (18, 18a) sont fermés et les pistons (3, 4) de l'amplificateur de forces de freinage sont reculés pour agrandir les chambres de travail (A1, A2), en particulier pour établir un jeu pour les garnitures dans les freins de roues (RB) alors que les vannes (7) sont simultanément ouvertes.

17. Procédé pour le fonctionnement d'une installation de freinage selon l'une des revendications 1 à 10 ou selon la revendication 16, **caractérisé en ce qu'**une partie du volume du maître-cylindre (5) de freinage est refoulée dans une ou plusieurs chambres de réalimentation (20) au moyen du maître-cylindre (5) de freinage alors que la vanne de réalimentation (8) est ouverte, et ensuite, alors que la vanne de réalimentation (8) est fermée et que la vanne de régulation (7) est ouverte, les pistons de frein dans les freins de roues (RB) sont soulevés, par rétraction des pistons (3, 4) du maître-cylindre (5) de freinage, depuis les disques de frein pour réaliser un jeu pour les garnitures.

18. Procédé selon la revendication 16 ou 17, **caractérisé en ce que** le jeu pour les garnitures est réglé dans les freins de roues (RB) les uns après les autres ou simultanément ou par paires.

19. Procédé selon l'une des revendications 16 à 18, **caractérisé en ce qu'**une vanne (18), qui est agencée dans la conduite (L) reliant le récipient de réserve (6) au maître-cylindre (5), est fermée pendant la génération d'une dépression par recul des pistons (3, 4) du maître-cylindre (5).

20. Procédé selon l'une des revendications 16 à 19, **caractérisé en ce que** l'on exécute une course définie des pistons (3, 4) au moyen de la pression, déterminée au moyen d'un capteur (12), dans la conduite de freinage (BL) ou dans le maître-cylindre (5).

21. Procédé selon l'une des revendications 16 à 20, **caractérisé en ce que** le piston (9) de la chambre de réalimentation (20) se trouve dans une position intermédiaire, de sorte que celle-ci peut encaisser un volume supplémentaire pour la commande de la dépression ou pour le réglage du jeu des garnitures.

22. Procédé selon la revendication 21, **caractérisé en ce que** cette position intermédiaire est atteinte par des temps d'ouverture ciblés des vannes magnétiques (8) et renvoi du volume vers les chambres de travail (A1, A2) du maître-cylindre (5) pendant les périodes pendant lesquelles il n'y a pas de freinage.

23. Procédé selon l'une des revendications 16 à 22, **caractérisé en ce que** la régulation de la position intermédiaire du piston (9) d'une chambre de réalimentation (20) a lieu au moyen du capteur de position (24).

24. Procédé selon l'une des revendications 16 à 23, **caractérisé en ce que** le volume de liquide de freinage accumulé dans une chambre de réalimentation (20) avant le commencement d'un freinage est mis à disposition par un signal externe pour effectuer un préremplissage des freins par ouverture de la vanne de réalimentation (8) et en option d'une vanne ou de toutes les vannes de régulation (7).

25. Procédé selon la revendication 24, **caractérisé en ce que** ce volume, lors de la commande de dépression, est choisi d'une telle taille que, lors du préremplissage des freins il apparaît une pression d'environ 5 bars.

26. Procédé selon l'une des revendications 16 à 25, **caractérisé en ce que** pour établir un jeu entre le disque de frein et les garnitures de freins dans un frein de roue (RB) on engendre au moyen des pistons (3, 4) une dépression dans les chambres de travail (A1, A2) de l'amplificateur de force de freinage, et simultanément la ou les vanne(s) respective(s) (7) est/sont ouverte(s) et la conduite (L), qui relie la chambre de travail respective (A1, A2) de l'amplificateur de force de freinage au récipient de réserve (6) ou au système de réalimentation (20'), est refermée au moyen de la vanne (18 ; 19, 19a).

27. Procédé selon l'une des revendications 16 à 26, **caractérisé en ce que**, pour annuler le jeu des garnitures, les vannes (18, 18a) sont fermées et ensuite les vannes (7) ainsi que la vanne respective (8, 19, 19a) sont ouvertes.

28. Procédé selon la revendication 27, **caractérisé en ce que**, lorsqu'il règne dans la conduite de freinage respectif (22) une pression entraînant une force de freinage, la conduite de freinage est reliée au récipient de réserve (6) par ouverture des vannes correspondantes (18, 18a, 19, 19a).

29. Procédé selon l'une des revendications 16 à 28, **caractérisé en ce que** pour annuler le jeu des garnitures, les vannes (8) sont fermées et la ou les vanne(s) (7) est/sont ouverte(s), suite à quoi le fluide hydraulique est alimenté dans les freins de roues au moyen des pistons (3, 4) via la conduite de freinage (22).
